# EUROPÄISCHE PATENTSCHRIFT

(11) **EP 0 681 757 B1**
(45) Veröffentlichungstag und Bekanntmachung des Hinweises auf die Patenterteilung: **12.06.1996**
(21) Anmeldenummer: 94905720.2
(22) Anmeldetag: 27.01.1994
(51) Int. Cl.: H02K 49/10

(54) **MAGNETISCHE KRAFTÜBERTRAGUNGSVORRICHTUNG**
MAGNETIC FORCE-TRANSMITTING DEVICE
DISPOSITIF MAGNETIQUE DE TRANSMISSION DE FORCE

(30) Priorität: 27.01.1993 DE 4302216
(43) Veröffentlichungstag der Anmeldung: 15.11.1995
(73) Patentinhaber: NWT MANAGEMENT S.A., CH-1211 Genève 1 (CH); CRYAL HOLDINGS LTD., Road Town, Tortola (VG)
(72) Erfinder: SCHRÖTTER, Johannes, D-94036 Passau (DE)
(74) Vertreter: Laufhütte, Dieter, Dr.-Ing.
(86) Internationale Anmeldenummer: EP9400227
(87) Internationale Veröffentlichungsnummer: WO9417583

(56) Entgegenhaltungen:
- DE-A- 2 010 849
- DE-A- 3 306 446
- DE-C- 860 087
- DE-C- 3 729 510
- FR-A- 1 589 173
- RESEARCH DISCLOSURE, Nr.311, März 1990, HAVANT GB Seite 218, XP000104496 - 'Non-contact magnetic gear drive'
- IEEE TRANSACTIONS ON MAGNETICS, Nr.5, September 1987, NEW YORK US Seiten 3622 - 3624 TSURUMOTO ET AL 'a new magnetic gear using permanent magnet'
- PATENT ABSTRACTS OF JAPAN vol. 13, no. 518 (E-848) 20. November 1989 & JP,A,01 209 942 (SHIN MEIWA) 23. August 1989

## Beschreibung

Die Erfindung betrifft eine Kraftübertragungsvorrichtung gemäß dem Oberbegriff von Anspruch 1.

Es sind magnetische Kraftübertragungsvorrichtungen bekannt, bei welchen eine Antriebskraft von einem drehbar gelagerten Körper auf einen anderen drehbar gelagerten Körper übertragen wird. Die Körper sind zueinander achsparallel und nebeneinander angeordnet, und die Kraftübertragung erfolgt aufgrund der Magnetwirkung nach der Art miteinander kämmender, ein Getriebe bildender Zahnräder. Problem dieser bekannten Kraftübertragungsvorrichtungen ist es, daß mit zunehmender Größe der zu übertragenden Kraft die Übertragungsverluste ansteigen. Andererseits sind magnetische Kraftübertragungsvorrichtungen hinsichtlich der Verschleißfreiheit bzw. -armut mechanischen Kraftübertragungsvorrichtungen überlegen.

Ferner ist es bekannt, Magnetkräfte für die Bereitstellung magnetischer Kupplungen zu verwenden. Derartige Kupplungen können bei entsprechender Ausgestaltung vergleichsweise spielarm ausgebildet sein, und durch die Realisierung von Elektromagneten ohne mechanische Verstellbewegungen eine variable Kupplungs-funktion sicherstellen. Die Aktivierung der Elektromagnete erfordert einen entsprechenden Energieverbrauch. Dennoch werden derartige Kupplungen eingesetzt, wenn die Verschleißarmut, aber auch das Entkoppeln von Vibrationen und dergleichen relevant ist.

Nach dem Prinzip von Magnetkupplungen arbeiten beispielsweise Magnetrührer, bei denen sich der schlechte Wirkungsgrad durch die mechanische Entkopplung rechtfertigen läßt.

Für die Bereitstellung möglichst verlustarmer Kraftübertragungsvorrichtungen wird daher in der Regel mit mechanischen Getrieben gearbeitet, deren Wirkflächen hochpräzise bearbeitet sind. Wirkungsgrade von um 99 % sind auf diese Weise erreichbar. Derartige hochwertige Getriebe erfordern jedoch für die Aufrechterhaltung ihres guten Wirkungsgrades eine kontinuierliche Kontrolle hinsichtlich der Schmierung, des Lagerspiels sowie gegebenenfalls der Abnutzung.

Aus der FR-A-1 589 173 ist eine magnetische Kraftübertragungsvorrichtung bekannt, bei der zwei zueinander benachbarte walzenförmige Körper im Umfangsbereich Magnetspiralen aufweisen. Dabei sind auf den jeweiligen Walzen Nordpole bzw. Südpole ausgebildet, wobei die benachbarten Walzen so angeordnet sind, daß dem Südpol einer Walze ein Nordpol einer anderen Walze gegenüber liegt.

Ausgehend von der vorbekannten Kraftübertragungsvorrichtung stellt sich die Aufgabe, eine derartige Vorrichtung so weiter zu bilden, daß sie im Wirkungsgrad verbessert ist und auch für sehr hohe Drehzahlen geeignet ist.

Diese Aufgabe wird erfindungsgemäß durch Anspruch 1 gelöst. Vorteilhafte Weiterbildungen ergeben sich aus den Unteransprüchen.

Bei der erfindungsgemäßen magnetischen Kraftübertragungsvorrichtung ist es besonders günstig, daß die erfindungsgemäßen Magnetspiralen gegeneinander etwas versetzt arbeiten und eine einer idealen Spirale zumindest nahekommende Form aufweisen. Indem gleiche Pole der einander benachbarten Walzenkörper je nach außen weisen, stoßen die sich gegenüberliegenden gleichen Pole ab. Es erfolgt ein Gleiten der Magnetspiralen aneinander vorbei, wobei wesentlich ist, daß die einander gegenüberliegenden Felder der Permanentmagneten einander nicht schneiden, sondern praktisch entlang der Richtung der Feldlinien ineinander eintreten und sich auseinander herausbewegen. Feldlinien werden nicht geschnitten, und es entstehen keine Wirbelströme.

Besonders günstig ist bei der erfindungsgemäßen magnetischen Kraftübertragungsvorrichtung der bei entsprechender Ausgestaltung äußerst hohe Wirkungsgrad, der praktisch durch die Lagerreibung festgelegt wird, wobei die erfindungsgemäße Kraftübertragungsvorrichtung auch für den Betrieb in einem Vakuum geeignet ist. Bevorzugt ist beim Betrieb unter Atmosphärendruck der Körper je exakt zylindrisch, um den Luftwiderstand möglichst gering zu halten.

Erfindungsgemäß lassen sich mit der Kraftübertragungsvorrichtung auch Antriebskräfte mit sehr hohen Drehzahlen übertragen. Dies liegt darin begründet, daß die reine Kraftübertragung äußerst verlustarm bzw. unter praktischen Gesichtspunkten betrachtet verlustfei erfolgt.

Thermographische Untersuchungen mit einem hochauflösenden Thermograph ergaben, daß die Erwärmung im Kraftübertragungsbereich, also die Erwärmung der eigentlichen Körper, höchstens 5 % der Lagererwärmung beträgt. Die wurde unter folgenden Parametern ermittelt:

| | |
|---|---|
| übertragene Leistungen: | 1,1 KW |
| Walzendurchmesser | 16 cm |
| Walzenlänge | 25 cm |
| Drehzahl | 3200 U/min |
| Magnetspurbreite | 8 mm |
| Magnetspurabstand (Steigung) | 8 cm |
| Spirale | 2-wendlig |
| Magnetmaterial | Neodym 370 |
| Luftspalt | 0,2 mm |
| Beschichtungsmaterial | Messing |
| Beschichtungsstärke | 0,2 mm |
| Lager | handelsübliche |
| | Walzenlager |

Besonders günstig ist es ferner, wenn die wirksame Breite der Magnetspuren erheblich geringer als der Abstand zwischen den Magnetspuren in axialer Richtung, also die Steigung bei einwendligen Spiralen bzw. die halbe Steigung bei zweiwendligen Spiralen, ist. hierdurch wird verhindert, daß die zueinander benachbarten Magnetspuren einander beeinflussen. Es entsteht zugleich ein entsprechendes Spiel bei der Kraftübertragung, das erfindungsgemäß zur weiteren Verminderung von Verlusten erwünscht ist. Die Einleitung der Kraftübertragung erfolgt weich, also mit langsam zunehmender Gegenkraft, wobei dennoch auch bei geringer Steigung aufgrund der hochwirksamen Magnetelemente kein Schlupf entsteht.

Bevorzugt sind die Magnetelemente klein und in einer Reihe angeordnet, so daß sie nach außen eine im wesentlichen gleichförmige Magnetspur bilden. Die Kraftübertragung zwischen einander schräg gegenüberliegenden Magnetspiralen erfolgt so, daß die je ausgerundete Charakteristik eines Einzelmagneten noch nicht wirksam wird, sondern vielmehr die Einzelmagnetelemente als ein langgestreckter Magnet wirken. Beschleunigungs- und Abbremsverluste aufgrund einer ungleichförmigen Magnetcharakteristik werden so sicher vermieden.

Die Erfindung läßt sich besonders günstig für die hochwirksame Energieauskupplung in Motor/Generator-Systemen einsetzen. Gegenüber den bekannten Systemen können ohne weiteres 90 % der Kraftübertragungsverluste eingespart werden, wodurch ganz neue Anwendungsgebiete ermöglicht werden.

Bevorzugt sind die Spiralen einander benachbarter Körper gegensinnig gerichtet, wobei sich eine gegensinnige Walzendrehrichtung ergibt. Es ist selbstverständlich auch möglich, gleichsinnige Spiralen zu verwenden, wobei sich eine gleichsinnige Walzenrichtung ergibt. Besonders günstig ist es, daß auf einfache Weise mit ein und der gleichen Antriebsspirale eine beliebige Drehrichtung je nach der Ausgestaltung der Abtriebsspirale wählbar ist. Die gegensinnige Spirale kommt unter Nicht-Vakuum-Bedingungen mit noch etwas verminderten Verlusten aus, nachdem die durch die Walzen erzeugte Luftströmung in Umfangsrichtung bei gegensinnigen Spiralen im Nachbarschaftsbereich gleichsinnig ist.

Für eine verlustarme Übertragung ist es wesentlich, die Oberflächenrauhigkeit der idealen Walzen nahekommenden Körper möglichst gering zu halten. Hierdurch werden die Mitnahmeeffekte für die umgebende Luft gering gehalten. Es versteht sich, daß bereits bei etwas vermindertem Luftdruck die durch die Luftmitnahme entstehenden Verluste weiter vermindert werden.

Die Ausgestaltung der erfindungsgemäßen Magnetspiralen kann in weiten Bereichen den Erfordernissen angepaßt werden. Eine Steigung von beispielsweise etwa 15° mit einer zweiwendligen Spirale ergibt einen solchen Abstand zwischen den einzelnen Magnetspiralen, je in achsparalleler Richtung betrachtet, daß die benachbarten Spiralen einander nicht beeinflussen, ein sehr gleichförmiges Gleiten der Magnetspiralen der benachbarten Körper aneinander vorbei erfolgen kann, und dennoch - Anwendung entsprechend starker Magnete vorausgesetzt - kein Schlupf entsteht.

Es ist möglich, die Abmessungen der erfindungsgemäßen Körper in weiten Bereichen an die Erfordernisse anzupassen. Falls eine den Durchmesser um ein Vielfaches übersteigende Länge der Körper gewünscht ist, kann jeder Körper ggf. mit mehreren Unterstützungslagern abgestützt werden.

Die übertragbaren Kräfte steigen bei zunehmendem Steigungswinkel an, wobei jedoch bei einem Steigungswinkel von beispielsweise 60° die Verluste auch bei sehr langen Walzen unbefriedigend hoch sein würden. Gewünschtenfalls kann durch eine mehrwendlige Spirale, die vielfach auch als mehrgängige Wendel bezeichnet wird, trotz geringer Steigung das Spiel bei der Kraftübertragung vermindert werden, wobei im Extremfall auch eine spielfreie, d. h. eine sich im Freilauf auf genau eine Stellung definiert einstellende Stellung der Abtriebswalze möglich ist.

Wichtig ist ferner die gleiche Wahl für den Steigungswinkel einander gegenüberliegender Walzen.

Gleicher Steigungswinkel vorausgesetzt kann der Durchmesser einander gegenüberliegender Walzen unterschiedlich sein. Dies führt zu der Möglichkeit, mit den erfindungsgemäßen Kraftübertragungsvorrichtungen ein Über- oder Untersetzungsgetriebe zu schaffen.

Weitere Vorteile, Einzelheiten und Merkmale der Erfindung ergeben sich aus der nachstehenden Beschreibung eines Ausführungsbeispiels an Hand der Zeichnung.

Es zeigen:
- Fig. 1: eine leicht schematisierte perspektivische Ansicht einer erfindungsgemäßen magnetischen Kraftübertragungsvorrichtung in einem Ausführungsbeispiel;
- Fig. 2: eine leicht schematisierte perspektivische Ansicht einer erfindungsgemäßen magnetischen Kraftübertragungsvorrichtung in einem weiteren Ausführungsbeispiel;
- Fig. 3: eine Ansicht einer Abwicklung eines erfindungsgemäßen, im wesentlichen walzenförmigen Körpers, zur Darstellung der Anordnung der Magnetspiralen, in einer einwendligen Ausgestaltung einer erfindungsgemäßen Kraftübertragungsvorrichtung; und
- Fig. 4: eine Darstellung einer weiteren Ausgestaltung einer erfindungsgemäßen Kraftübertragungsvorrichtung, in der Draufsicht auf einander gegenüberliegende walzenförmige Körper.

Eine erfindungsgemäße Kraftübertragungsvorrichtung 10 umfaßt zwei einander gegenüberliegende, walzenförmige Körper 12 und 14. Einer der Körper, beispielweise der Körper 12, ist als Antriebswalze und der andere, beispielsweise der Körper 14, ist als Abtriebswalze vorgesehen. Beide Körper sind in hier nicht im einzelnen dargestellten Wälzlagern je stirnseitig gelagert. Als Wälzlager werden hochwertige Bauteile verwendet, die sowohl hinsichtlich der Verschleißarmut als auch hinsichtlich der Lagerreibung dem Industrie-Standard überlegen sind. Die Körper 12 und 14 bestehen aus einem auch bei Temperaturänderungen vergleichsweise maßhaltigen Material. Im Beispielsfalle sind sie aus Aluminium ausgebildet. Ein Luftspalt 16 ist zwischen den Körpern 12 und 14 vorgesehen, wobei der Luftspalt zugleich dem Ausgleich etwaiger temperaturbedingter Verformungen der Körper 12 und 14 dient. Bei dem vorliegenden Ausführungsbeispiel hat er die Größe von 0,2 mm bei einem Durchmesser der Körper 12 und 14 von 162 mm.

Die Körper 12 und 14 weisen je Magnetspiralen 18 und 20 auf, die im Beispielsfalle gegensinnig ausgerichtet sind. Wenn der Körper 12 an einer Antriebswelle 22 im Uhrzeigersinn angetrieben wird, kann an einer Abtriebswelle 24 an dem Körper 14 die übertragene Kraft gegen den Uhrzeigersinn abgegriffen werden.

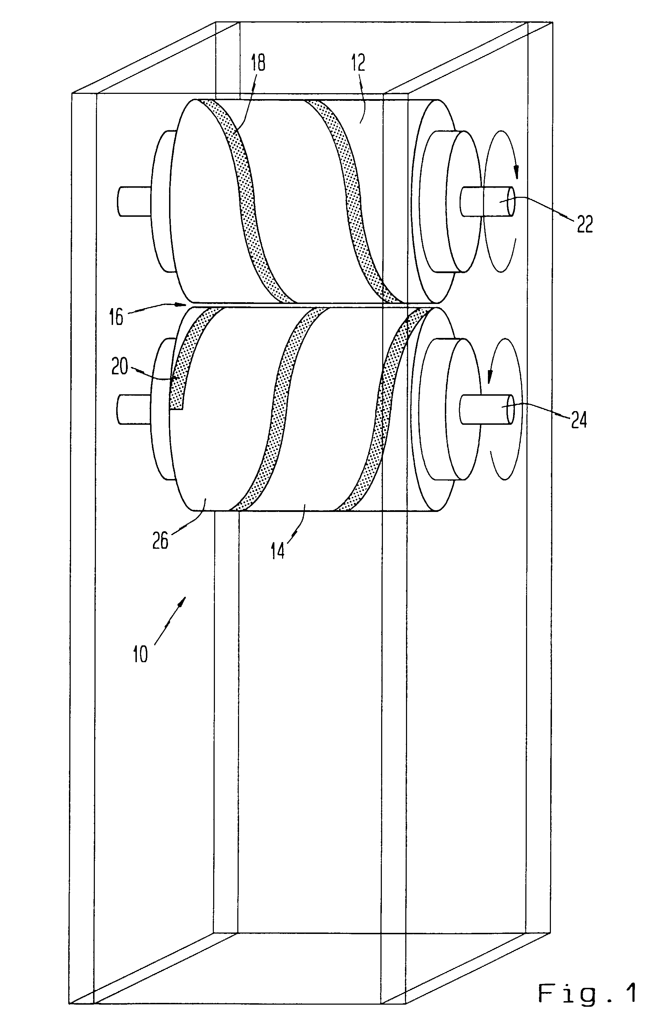

Wie aus Fig. 1 ersichtlich ist, sind im Bereich des Luftspaltes 16 die Magnetspiralen 18 und 20 im Betrieb knapp nebeneinander, und insofern in axialer Richtung asymmetrisch. Die Magnetspirale 18 des antreibenden Körpers 12 schiebt praktisch den entsprechenden Teil der Magnetspirale 20 des abtreibenden Körpers 14 vor sich her, nachdem die gleichen Magnetpole einander zugewandt sind, so daß insofern ein Abstoßungseffekt vorliegt. Dieses Schieben erfolgt äußerst verlustarm, nachdem die Wirkung von Einzelmagneten, aus welchen die Magnetspiralen 18 und 20 zusammengesetzt sein können, vernachlässigbar ist.

Die Magnetspiralen 18 und 20 sind je am Umfang der Körper 12 und 14 angeordnet. Dies bedeutet jedoch nicht, daß sie nach außen freiliegen. Vielmehr sind sie von einer Beschichtung 26 aus einem nicht-magnetischen Material abgedeckt, das gegenüber Luft eine geringe Reibung aufweist. Beispielsweise kann eine polierte Keramik-, Kunststoff- oder Titan-Schicht verwendet werden, wobei eine Stärke von 0,2 mm voll ausreicht.

Der radiale Abstand der Magnetspiralen 18 und 20 im Nachbarschaftsbereich ist damit sehr gering, beispielsweise etwa 0,6 mm.

Die Magnetspiralen 18 und 20 sind als einwendlige Spiralen vorgesehen. Da kleine konzentrierte Magnetelemente verwendet werden, ist der Wirkbereich der Magnetspiralen 18 und 20 erheblich geringer als die Steigung, also der Abstand der benachbarten Gänge der Magnetspiralen 18, 20 in axialer Richtung betrachtet. Dies bewirkt ein entsprechendes Spiel, das erfindungsgemäß günstig ist. Beim Anlaufen erfolgt dennoch, unabhängig von der Stellung, in der sich der antreibende Körper gegenüber dem abtreibenden Körper befindet, kein Anschlagen, nachdem die benachbarten Magnetspiralen in ihrer Kraftübertragungswirkung wie eine Feder mit progressiver Kennlinie wirken.

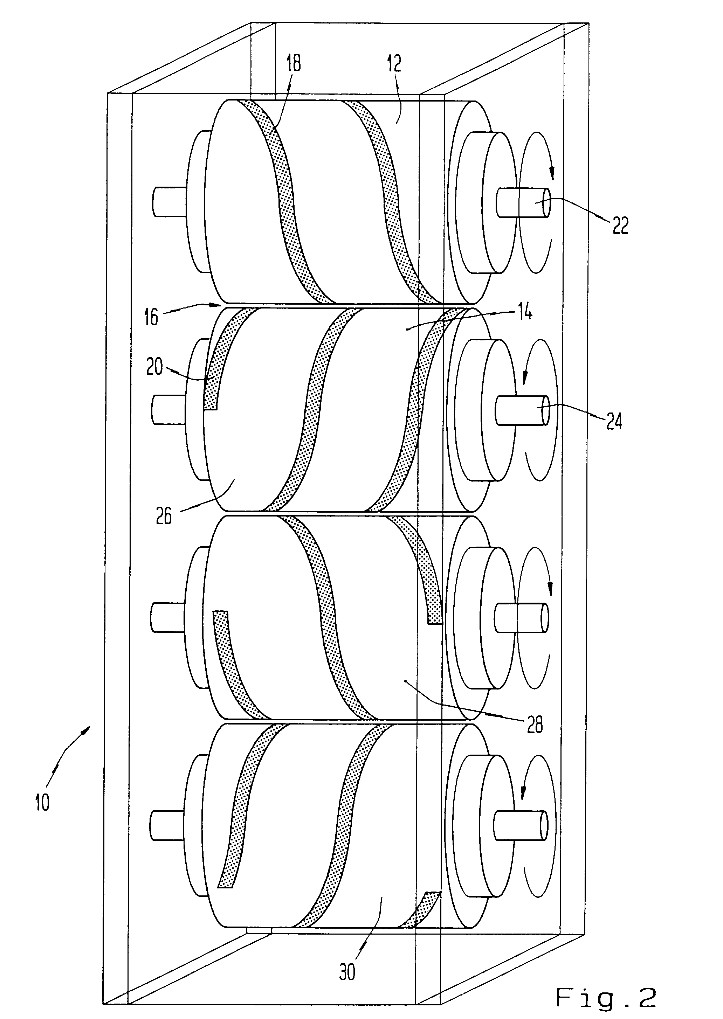

Eine weitere Ausgestaltung der Erfindung ist aus Fig. 2 ersichtlich. Bei dieser Ausgestaltung sind vier walzenförmige Körper vorgesehen, wobei zusätzlich zu den Körpern 12 und 14 je weitere Abtriebskörper 28 und 30 verwendet werden. Gleiche Bezugszeichen entsprechen hier wie auch in den weiteren Figuren gleichen Teilen.

Je benachbarte Körper drehen sich gegensinnig. Es läßt sich somit eine besonders verlustarme bzw. -lose Kraftverteilung realisieren, wobei gewünschtenfalls auch mehr als vier Körper für die Kraftverteilung verwendet werden können.

Es ist nicht erforderlich, daß die Körper 12, 14, 28 und 30 in einer Reihe übereinander angeordnet sind. Vielmehr können sie in einer beliebigen geometrischen Anordnung vorgesehen sein, wobei die Achsen im Grunde auch im Quadrat angeordnet sein können, so daß je doppelte Kraftübertragungswege vorliegen.

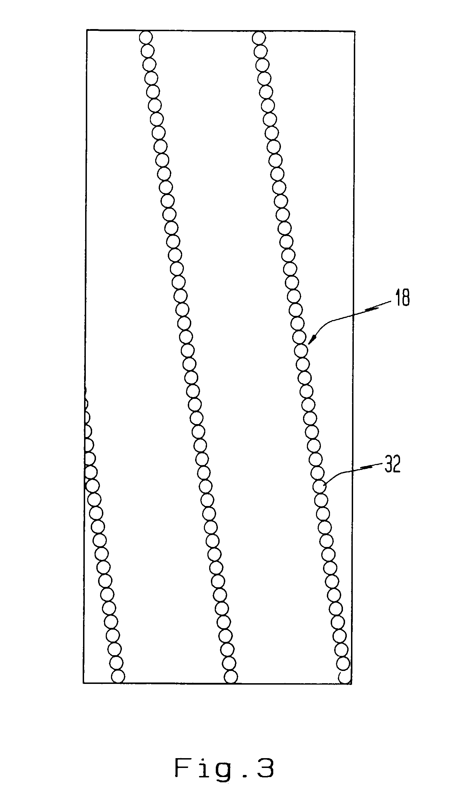

Aus Fig. 3 ist eine beispielhafte Anordnung der Magnetspiralen, beispielsweise der Magnetspirale 18 in der Abwicklung ersichtlich. Die Magnetspirale 18 besteht aus einer Vielzahl in einer Reihe angeordneter Magnetelemente 32, wobei bei der in Fig. 3 dargestellten Ausführungsform der Steigungswinkel etwa 8° beträgt. Hier handelt es sich um eine einwendlige Spirale, so daß ein entsprechend großes Spiel vorliegt, nachdem der Bereich zwischen den einzelnen Gängen der Magnetspirale 18 erheblich größer als die wirksame Breite jeder Reihe von Einzelmagneten 32 ist.

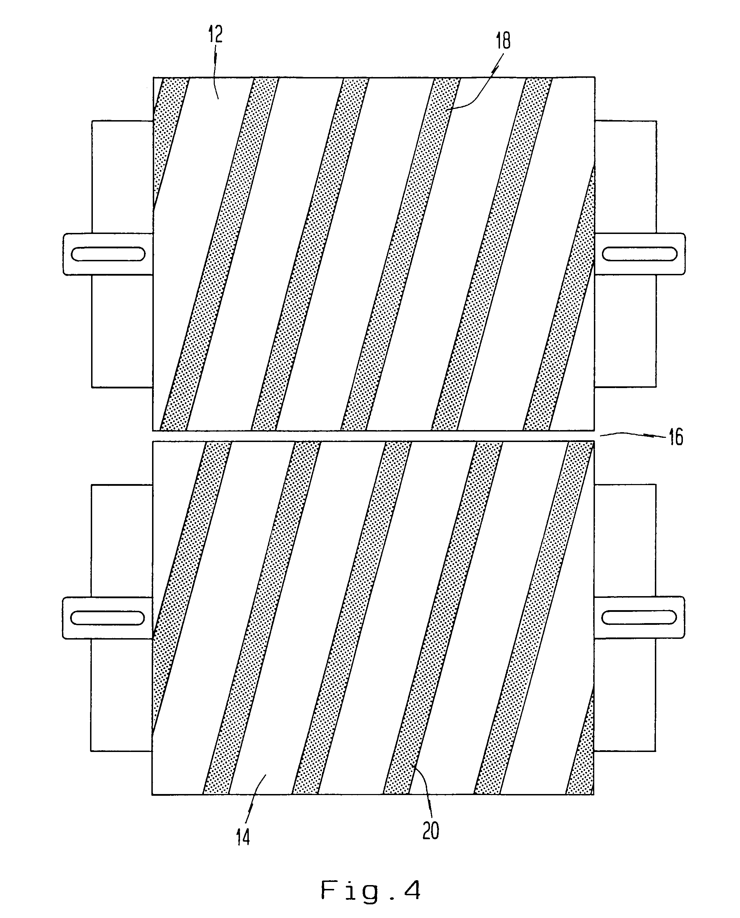

Aus Fig. 4 ist eine weitere Ausgestaltung der erfindungsgemäßen Kraftübertragungsvorrichtung ersichtlich. Im Unterschied zu den Ausführungsbeispielen gemäß den Figuren 1 und 2 sind hier gleichsinnige Magnetspiralen 18 und 20 zueinander benachbart. Daher dreht sich der Körper 12 in der gleichen Richtung wie der Körper 14. Der Luftspalt 16 ist in diesem Ausführungsbeispiel etwas größer gewählt, jedoch so, daß Schlupf zwischen den Körpern 12 und 14 nicht möglich ist.

Ferner werden bei der Ausgestaltung gemäß Fig. 4 dreiwendlige Magnetspiralen 18 und 20 verwendet.

## Patentansprüche

1. Magnetische Kraftübertragungsvorrichtung, mit mindestens zwei im wesentlichen walzenförmigen Körpern, die einander benachbart drehbar gelagert sind,
dadurch gekennzeichnet,
daß Magnetspiralen im Umfangsbereich der benachbarten Walzen (12, 14, 28, 30) einander zugewandt so angeordnet sind, daß gleiche Pole nach außen weisen, so daß ein Abstoßungseffekt zwischen diesen Walzen (12, 14, 28, 30) vorliegt.

2. Kraftübertragungsvorrichtung nach Anspruch 1, dadurch gekennzeichnet, daß die Magnetspiralen (18, 20) aus in einer Reihe angeordneter hochwirksamer Magnetelemente (32) bestehen.

3. Kraftübertragungsvorrichtung nach einem der vorhergehenden Ansprüche, dadurch gekennzeichnet, daß die Magnetspiralen (18, 20) in achsparalleler Richtung betrachtet einen Abstand (Steigung) aufweisen, der ein Mehrfaches, vorzugsweise das 2- bis 30-fache der Breite der Magnetelemente (32) beträgt.

4. Kraftübertragungsvorrichtung nach einem der vorhergehenden Ansprüche, dadurch gekennzeichnet, daß die Magnetspiralen (18, 20) gegensinnig zueinander angeordnet sind und die Drehrichtung der walzenförmigen Körper (12, 14, 28, 30) gegensinnig ist.

5. Kraftübertragungsvorrichtung nach einem der Ansprüche 1 bis 3, dadurch gekennzeichnet, daß die Magnetspiralen (18, 20) gleichsinnig zueinander angeordnet sind und die Drehrichtung der walzenförmigen Körper (12, 14, 28, 30) gleichsinnig zueinander ist.

6. Kraftübertragungsvorrichtung nach einem der vorhergehenden Ansprüche, dadurch gekennzeichnet, daß der Steigungswinkel der Spiralen (18, 20) 2° bis etwa 60°, vorzugsweise 5° bis 30° und insbesondere etwa 15° beträgt.

7. Kraftübertragungsvorrichtung nach einem der vorhergehenden Ansprüche, dadurch gekennzeichnet, daß auf jedem Körper (12, 14, 28, 30) 1 bis 30 Magnetspiralen, insbesondere 2 Magnetspiralen (18, 20) ausgebildet sind.

8. Kraftübertragungsvorrichtung nach einem der vorhergehenden Ansprüche, dadurch gekennzeichnet, daß die Magnetspiralen (18, 20) von einer Schicht (26) nichtmagnetischen Materials umgeben sind, das insbesondere aus Titan, Edelmetall, Kunststoff oder Keramik besteht und insbesondere eine Stärke von unter 0,2 mm aufweist.

9. Kraftübertragungsvorrichtung nach einem der vorhergehenden Ansprüche, dadurch gekennzeichnet, daß benachbarte Körper (12, 14, 28, 30) an ihrem Außenumfang berührungsfrei mit einem Abstand (Luftspalt 16) von insbesondere weniger als einem 1/100, vorzugsweise etwa einem 1/1000 ihres Durchmessers oder weniger angeordnet sind.

10. Kraftübertragungsvorrichtung nach einem der vorhergehenden Ansprüche, dadurch gekennzeichnet, daß die walzenförmigen Körper (12, 14, 28, 30) als Walzen mit einem ununterstützten Länge von etwa dem 1 bis 50-fachen, vorzugsweise dem etwa 2-fachen des Durchmessers ausgebildet sind.

11. Kraftübertragungsvorrichtung nach einem der vorhergehenden Ansprüche, dadurch gekennzeichnet, daß die Magnetspiralen (18, 20) gleiche Steigerungswinkel aufweisen.

12. Kraftübertragungsvorrichtung nach einem der vorhergehenden Ansprüche, dadurch gekennzeichnet, daß die Körper (12, 14, 28, 30) gleich ausgebildet sind.

13. Kraftübertragungsvorrichtung nach einem der Ansprüche 1 bis 11, dadurch gekennzeichnet, daß zwei einander benachbarte Körper (12, 14, 28, 30) einen unterschiedlichen Durchmesser aufweisen.

## Claims

1. A magnetic force transmission device, with at least two substantially cylindrical bodies which, being adjacent to each other, are mounted for rotation,
characterized in that
magnetic helices facing each other are arranged in the peripheral zone of the adjacent cylinders (12, 14, 28, 30) in such a way that like poles point outwards, so that there exists a repulsion effect between these cylinders (12, 14, 28, 30).

2. A force transmission device according to claim 1, characterized in that the magnetic helices (18, 20) consist of highly effective magnetic elements (32) arranged in a row.

3. A force transmission device according to one of the preceding claims, characterized in that the magnetic helices (18, 20) have an interspacing (lead) as viewed in an axial direction, which amounts to a multiple, preferably two to thirty times the width of the magnetic elements (32).

4. A force transmission device according to one of the preceding claims, characterized in that the magnetic helices (18, 20) are arranged in opposite directions to one another, and the directions of rotation of the cylindrical bodies (12, 14, 28, 30) are opposed to one another.

5. A force transmission device according to one of claims 1 to 3, characterized in that the magnetic helices (18, 20) are arranged in the same directions with respect to one another, and the directions of rotation of the cylindrical bodies (12, 14, 28, 30) are the same with respect to one another.

6. A force transmission device according to one of the preceding claims, characterized in that the lead angle of the helices (18, 20) amounts to 2° up to approximately 60°, preferably 5° to 30°, and in particular to approximately 15°.

7. A force transmission device according to one of the preceding claims, characterized in that on each body (12, 14, 28, 30) there are formed one to thirty magnetic helices, in particular, two magnetic helices (18, 20).

8. A force transmission device according to one of the preceding claims, characterized in that the magnetic helices (18, 20) are surrounded by a coating (26) of a nonmagnetic material which consists in particular of titanium, a precious metal, a plastic, or a ceramic material, and has, in particular, a thickness of less than 0.2 mm.

9. A force transmission device according to one of the preceding claims, characterized in that adjacent bodies (12, 14, 28, 30) are arranged free of contact at their outer circumference, with an interspacing (an air gap 16) of, in particular, less than 1/100, preferably approximately 1/1000 of their diameter, or less.

10. A force transmission device according to one of the preceding claims, characterized in that the cylindrical bodies (12, 14, 28, 30) are designed as cylinders with an unsupported length of approximately one to fifty times, preferably approximately twice, their diameter.

11. A force transmission device according to one of the preceding claims, characterized in that the magnetic helices (18, 20) have the same lead angles.

12. A force transmission device according to one of the preceding claims, characterized in that the bodies (12, 14, 28, 30) have the same shape.

13. A force transmission device according to one of claims 1 to 11, characterized in that two bodies (12 14, 28, 30) adjacent to each other have different diameters. [KA7]

## Revendications

1. Dispositif magnétique de transmission de force avec au moins deux corps sensiblement en forme de cylindre qui sont logés à rotation l'un au voisinage de l'autre, caractérisé en ce que des spirales magnétiques sont disposées dans la zone de pourtour des cylindres avoisinants (12, 14, 28, 30) en étant orientés les unes vers les autres de telle sorte que les mêmes pôles soient orientés vers l'extérieur de façon qu'il existe un effet de répulsion entre ces cylindres (12, 14, 28, 30).

2. Dispositif de transmission de force selon la revendication 1, caractérisé en ce que les spirales magnétiques (18, 20) sont constituées d'éléments aimantés (32) hautement actifs disposés en rangées.

3. Dispositif de transmission de force selon l'une des revendications précédentes, caractérisé en ce que les spirales magnétiques (18, 20), en regardant dans la direction parallèle à l'axe, ont un écart (pas) qui constitue un multiple, de préférence 2 à 30 fois la largeur des éléments magnétiques (32).

4. Dispositif de transmission selon l'une des revendications précédentes, caractérisé en ce que les spirales magnétiques (18, 20) sont disposées en sens inverse les unes aux autres et que la direction de rotation des corps en forme de cylindre (12, 14, 28, 30) est en sens inverse.

5. Dispositif de transmission de force selon l'une des revendications 1 à 3, caractérisé en ce que les spirales magnétiques (18, 20) sont disposées dans le même sens les unes aux autres et que la direction de rotation des corps en forme de cylindre (12, 14, 28, 30) va dans le même sens.

6. Dispositif de transmission de force selon l'une des revendications précédentes, caractérisé en ce que l'angle de pas des spirales (18, 20) est de 2° jusqu'à environ 60°, de préférence de 5° à 30° et en particulier d'environ 15°.

7. Dispositif de transmission de force selon l'une des revendications précédentes, caractérisé en ce que sont réalisés sur chaque corps (12, 14, 28, 30), 1 à 30 spirales magnétiques, notamment 2 spirales magnétiques (18, 20).

8. Dispositif de transmission de force selon l'une des revendications précédentes, caractérisé en ce que les spirales magnétiques (18, 20) sont entourées par une couche (26) en un matériau non magnétique qui est constitué notamment de titane, de métal précieux, de matière synthétique ou de céramique et qui a notamment une épaisseur inférieure à 0,2 mm.

9. Dispositif de transmission de force selon l'une des revendications précédentes, caractérisé en ce que des corps avoisinants (12, 14, 28, 30) sont disposés à leur pourtour extérieur sans contact, avec un écart (entrefer 16) notamment inférieur à 1/100, de préférence de 1/1000 de leur diamètre ou moins.

10. Dispositif de transmission de force selon l'une des revendications précédentes, caractérisé en ce que les corps en forme de cylindre (12, 14, 28, 30) sont réalisés sous forme de cylindre d'une longueur non soutenue représentant environ 1 à 50 fois, de préférence environ 2 fois le diamètre.

11. Dispositif de transmission de force selon l'une des revendications précédentes, caractérisé en ce que les spirales magnétiques (18, 20) ont les mêmes angles de pas.

12. Dispositif de transmission de force selon l'une des revendications précédentes, caractérisé en ce que les corps (12, 14, 28, 30 sont réalisés de manière identique.

13. Dispositif de transmission de force selon l'une des revendications 1 à 11, caractérisé en ce que deux corps avoisinants (12, 14, 28, 30) ont un diamètre différent.
